# EUROPÄISCHE PATENTSCHRIFT

(11) **EP 0 838 943 B1**
(45) Veröffentlichungstag und Bekanntmachung des Hinweises auf die Patenterteilung: **16.07.2008**
(21) Anmeldenummer: 97203221.3
(22) Anmeldetag: 15.10.1997
(51) Int. Cl.: H04N 5/28

(54) **Anordnung zur Fernseh-Aussenübertragung einer Veranstaltung oder dergl.**
System for television transmission of an outdoor event
Dispositif de télévision pour la transmission en plein air d'un événement

(30) Priorität: 23.10.1996 DE 19643734
(43) Veröffentlichungstag der Anmeldung: 29.04.1998
(73) Patentinhaber: BTS Holding International B.V., 4827 HG Breda (NL)
(72) Erfinder: Fegesch, Hendrik, Röntgenstrasse 24, 22335 Hamburg (DE); Wüst, Wilfried, Röntgenstrasse 24, 22335 Hamburg (DE); Tschierschky, Jörg, Röntgenstrasse 24, 22335 Hamburg (DE)
(74) Vertreter: Lindemann, Robert

(56) Entgegenhaltungen:
- DE-A- 3 735 291
- DE-A- 4 403 803
- ROMERO M ET AL: "HDTV COVERAGE OF THE BARCELONA OLYMPIC GAMES" EBU REVIEW- TECHNICAL, Nr. 254, 1. Januar 1992 (1992-01-01), Seiten 16-24, XP000328315 ISSN: 0251-0936

## Beschreibung

Die Erfindung bezieht sich auf eine Anordnung zur Fernseh-Außenübertragung einer Veranstaltung oder dergl. mit Hilfe eines Übertragungswagens, der über Leitungen mit Einrichtungen zur Abgabe und/oder zum Empfang von Video-, Audio- oder Steuersignalen verbunden und in seinem Inneren mit entsprechenden Geräten zur Verarbeitung der Signale versehen ist.

Derartige Anordnungen mit Fernseh-Übertragungswagen sind bekannt. Ein Übertragungswagen ist eine kompakte und mobile technische Einheit, die Aufzeichnungen oder Live-Übertragungen mittlerer und großer Fernsehproduktionen ermöglicht. Solche Übertragungswagen werden z.B. für die Fernseh-Außenübertragung von Sport- und Programmveranstaltungen verwendet. Sie sind mit Fernsehkameras, Mikrofonen, Aufzeichnungs/Wiedergabe-Geräten und zahlreichen Fernseh- und Ton-Regiegeräten ausgestattet. Die Video-, Audio-und Steuersignale werden über verschiedene, oft mehrere hundert Meter lange abgeschirmte Kabel, z.B. Triax-Kabel, übertragen, um entfernt postierte Fernsehkameras mit den im Übertragungswagen installierten Geräten zu verbinden. Die während der Fahrt des Übertragungswagens auf großen Kabelrollen aufgewickelten schweren Kabel nehmen relativ viel Platz vom Nutzraum des Übertragungswagens ein.

Im Rahmen von Fernsehproduktionen für die Übertragung von Sport- und Programmveranstaltungen ist ein steigender Technikbedarf festzustellen. Neben der Erfüllung des eigentlichen Fernsehübertragungsauftrages sind vom Übertragungswagen aus weitere periphere Bereiche mit Quellersignalen für Kommentatorenplätze, Veranstaltungsleitung, Zuschauerbereiche usw. zu versorgen. Dies erfordert die zusätzliche Verlegung von Kabelwegen.

Darüber hinaus ist zu beobachten, daß mit dem zunehmenden Einsatz digitaler Video- und Audio-Technik die konventionelle Übertragungstechnik in Form von Kupferkabeln nicht geeignet ist, die neuen Anforderungen zu erfüllen.

Der derzeitige Stand der Technik für die vernetzte audiovisuelle Übertragung ist in der US-PS 54 86 877 beschrieben.

Der Zeitschriftenartikel "HDTV coverage of the Barcelona Olympic Games", M. Romero, E. Gavilan, EBU Technical Review, Nr. 254, S. 16-24, 1. Januar 1992 offenbart eine Anordnung zur Fernseh-Außenübertragung einer Veranstaltung oder dergleichen mit Hilfe von Übertragungswagen, die über optische Leitungen mit einer zentralen Koppelstation verbunden sind.

Aus der DE 37 35 291 A1 ist eine Übertragungsstrecke für opto-elektrische, digitale Audio- und Videosignale bekannt, bei der mobile Sendestationen mittels Lichtwellenleitern an eine Empfangsstation angeschlossen sind. In die Lichtwellenübertragungsstrecke sind optische Koppler zum Einspeisen von Signalen mehrerer mobiler Sendestationen eingesetzt.

Aus der DE 44 03 803 A1 ist ein optisches Übertragungssystem für Video- und Audiosignale bekannt, bei dem räumlich weit auseinander liegende Video- und Audiosignale über Signalleitungen mittels Sende- und Empfangseinheiten verbunden sind. Bei dem bekannten Übertragungssystem sind die räumlich weit auseinander liegenden Sendereinheiten über optische Koppler mit einer einzigen Empfangseinheit verbunden.

Der Erfindung liegt die Aufgabe zugrunde, den Verkabelungsaufwand für Außenübertragungen zu reduzieren, die Realisierung neuer Serviceleistungen zu ermöglichen und ein Basissystem für zukünftige Anforderungen und Techniken zu schaffen.

Diese Aufgabe wird gemäß der Erfindung bei einer Anordnung nach Anspruch 1 gelöst.

Eine derartige Bauweise weist den Vorteil auf, daß gegenüber dem bekannten Stand der Technik die Kabel der einzelnen Einrichtungen bzw. Signalquellen nicht mehr über weite Strecken sternförmig auf den Übertragungswagen aufgeschaltet werden müssen. Vielmehr laufen die gesonderten, von den einzelnen Einrichtungen kommenden Lichtwellenleiter auf eine räumlich optimal angeordnetes Koppelstation und werden dort mit dem von der Koppelstation abgehenden einzigen Lichtwellen-Breitbandkabel verbunden. Damit läßt sich zumindest ein Teil der Gesamt-Kabelstrecken nunmehr durch ein einzige Breitbandkabel überbrücken. Dadurch wird der Verkabelungsaufwand erheblich verringert, und der Kabelraum im Übertragungswagen kann zugunsten der Regieräume kleiner gehalten werden. Je nach den gegebenen Verhältnissen können einzelne Kameras weiterhin wie bisher über die als robust angesehenen Triax-Kabelverbindungen mit dem Übertragungswagen verbunden werden. Ein wesentlicher Vorteil der Erfindung besteht somit in der Bündelung der Signalwege über Lichtwellenleiter-Kabel.

Während in der Koppelstation eine rein optische Signalverteilung vorgenommen wird, erfolgt in der Andockstation, in welche das Lichtwellen-Breitbandkabel mündet, und in den genannten Einrichtungen eine Wandlung der Quellensignale mit Hilfe der elektrooptischen Wandlerelemente. Die Wandlung der Quellersignale ist erforderlich für die Bearbeitung im Übertragungswagen und für den Transfer in das Lichwellenleiter-Netz. Die Andockstation ist eine selbständige Baueinheit und ermöglicht eine Installation des Lichtwellenieiter-Netzes unabhängig von dem Übertragungswagen. Das Lichtwellenleiter-Netz kann somit soweit vorbereitet und installiert werden, daß bei Ankunft des Übertragungswagens lediglich eine Verbindung mit der Andockstation vorgenommen werden muß, um die volle Funktionsfähigkeit herzustellen.

Diese Andockstation kann in Ausgestaltung der Erfindung entweder mit einem oder mehreren Übertragungswagen oder z.B. mit einem externen Übergabepunkt für eine Telekommunikationseinrichtung verbunden werden. Durch eine derartige Andockstation kann somit die Standzeit des Übertragungswagens vor Ort verkürzt und der Dienstleistungsaufwand (Zeit, Lohnkosten) reduziert werden. Ferner wird damit die Flexibilität erhöht.

Eine weitere Ausgestaltung der Erfindung ist gekennzeichnet durch eine zweite Koppelstation, die eingangsseitig über gesonderte Lichtwellenleiter mit mindestens einem weiteren Unterregieblock und ausgangsseitig über ein Lichtwellen-Breitbandkabel mit der ersten Koppelstation verbunden ist. Damit bietet sich auf einfache Weise eine Möglichkeit zur Einbindung von einem oder mehreren Regieblöcken. Derartige Regieblöcke können z.B. sein entweder ein Regieblock für Ton und Beleuchtung oder eine Regieblock für Bildinformationen.

In der Anordnung nach Anspruch 1 ist vorgesehen, daß parallel zum Senderweg eine ATM(Asynchroner Transfer Modus)-Übertragungsstrecke vorgesehen ist, die mit einer Datenbank im Sendezentrum verbunden ist. Damit ergibt sich eine zusätzliche Serviceleistung z.B. für Kommentatoren, die über das Lichtwellenleiter-Netz dann einen direkten Zugriff auf die in der Datenbank gespeicherten Daten haben.

In der Zeichnung sind in den Fig. 2 bis 3 Ausführungsbeispiele des Gegenstandes gemäß der Erfindung schematisch dargestellt.
Fig. 1 zeigt ein Außenübertragungs-Netzwerk mit mehreren Kommentatorenplätzen, einer Grafik- und Zeitnahmeeinheit und einer Kameraeinheit,
Fig. 2 zeigt ein Außenübertragungs-Netzwerk mit ebenfalls mehreren Kommentatorenplätzen, mit zwei Unterregien und mit zusätzlichen Möglichkeiten für Serviceleistungen für Kommentatoren, und
Fig. 3 zeigt ein Außenübertragungs-Netzwerk am Beispiel eines Skirennens.

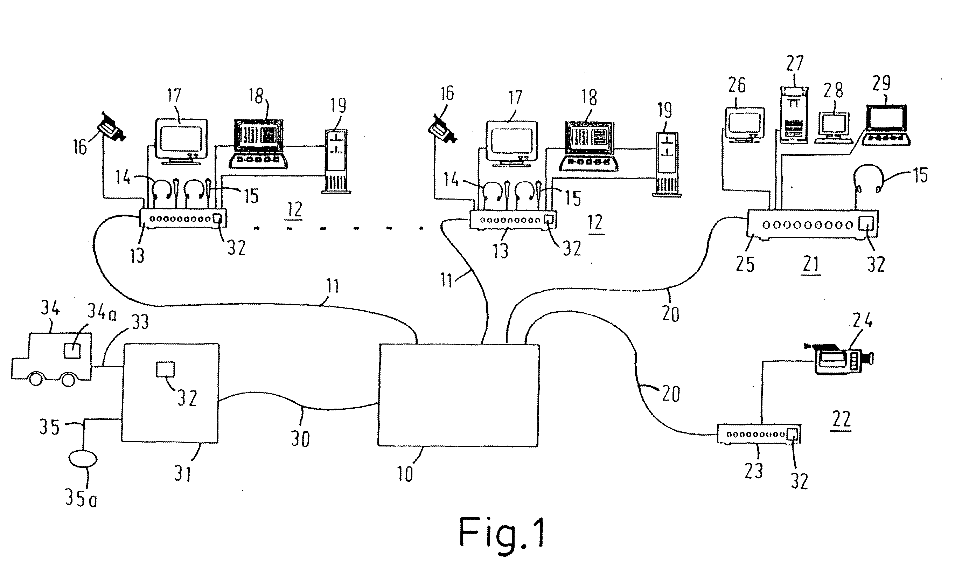

Gemäß Fig. 1 enthält das Netzwerk eine zentrale Koppelstation 10, welche über gesonderte Lichtwellenleiter 11 mit jeweils acht Kommentatorenplätzen 12 verbunden ist. Jeder Kommentatorenplatz 12 enthält im vorliegenden Ausführungsbeispiel eine Gerätegruppen 13 mit Kopfhörern 14 und Mikrofonen 15, eine Kamera 16, einen Bildmonitor 17, einen Datenmonitor 18 und eine Videoserverstation 19. Die Koppelstation 10 ist ferner über Lichtwellenleiter 20 mit einer Grafik- und Zeitnahmeeinheit 21 und einer Kameraeinheit 22 verbunden, die eine Geräteeinheit 23 und eine Stand-Alone-Kamera 24 aufweist. Die Grafik-und Zeitnalmeeinheit 21 enthält im vorliegenden Ausführungsbeispiel eine Geräteeinheit 25 mit Kopfhörer 15, einen Bildmonitor 26, eine Elektronikeinheit 27, einen Infomonitor 28 und einen Datenmonitor 29.

Die von den einzelnen Einrichtungen, d.h. von den Kommentatorenplätzen 12, der Grafik- und Zeitnahmeeinheit 21 und der Kameraeinheit 22 kommenden Lichtwellenleiter 11, 20 werden in der Koppelstation 10 mit einem Lichtwellen-Breitbandkabel 30 gekoppelt, welches von der Koppelstation 10 zu einer Andockstation 31 geführt ist. Die Andockstation 31 und die Gerätegruppen 13, 25, 23 der Einrichtungen 12, 21, 22 enthalten elektrooptische Wandlerelemente 32 zur Umwandlung von über die Lichtwellenleiter geführten Quellensignalen. Die Andockstation 31 ist über einen ersten Ausgang 33 mit einem Übertragungswagen 34 verbunden, der Geräte 34a enthält, und kann über einen weiteren Ausgang 35 mit einem externen Übertragungspunkt 35a verbunden werden. Die Umwandlung der Quellensignale in der Andockstation 31 ist erforderlich einerseits für die Bearbeitung im Übertragungswagen 34 und andererseits für den Transfer in das Lichtwellenleiter-Netz.

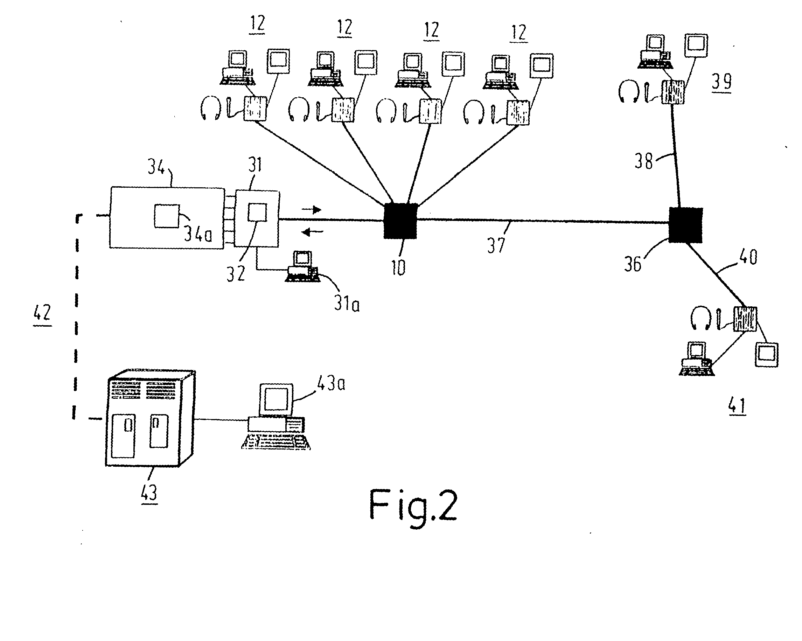

Fig. 2 zeigt ein Ausführungsbeispiel ähnlich Fig. 1 mit einer Koppelstation 10 und vier angeschlossenen Kommentatorenplätzen 12, wobei zusätzlich eine weitere Koppelstation 36 über ein Lichtwellen-Breitbandkabel 37 mit der ersten Koppelstation 10 verbunden ist. Die zusätzliche Koppelstation 36 ist hier über einen Lichtwellenleiter 38 mit einer Unterregie 39 für Ton und Beleuchtung und über einen Lichtwellenleiter 40 mit einer Unterregie 41 für Bildinformationen verbunden. Neben dieser einfachen Einbindung von Unterregien, die für große Produktionen eingerichtet werden, können zusätzliche Serviceleistungen für die Kommentatorenplätze 12 über das Lichtwellenleiter-Netz angeboten werden, und zwar parallel zum Sendeweg über eine ATM-Übertragungsstrecke 42 (Asynchroner Transfer-Modus). Diese Übertragungsstrecke wird gebildet durch eine Verbindung zwischen dem Übertragungswagen 34 und einem Sendezentrum 43. Damit können z.B. Zugriffsmöglichkeiten auf Datenbanken im Sendezentrum geschaffen werden. Ein PC 31a verdeutlicht eine evtl. vorzunehmende Konfiguration der Signalwege, und ein PC 43a als Server im Sendezentrum verdeutlicht die Zugriffsmöglichkeit auf einen Server vor Ort.

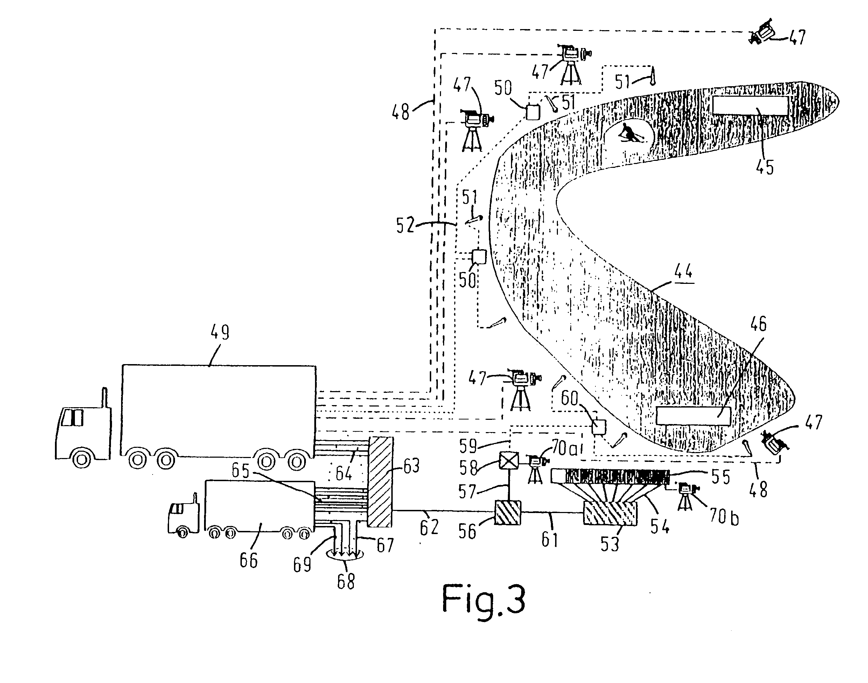

Gemäß Fig. 3 wird gezeigt, wie bei einem Skirennen mit Hilfe der Erfindung der Verkabelungsaufwand zwischen den Übertragungswagen, den Zeitnahmeeinrichtungen und den Sprecherkabinen verringert werden kann. Mit 44 ist eine Skirennbahn bezeichnet, mit einem Start an der Stelle 45 und einem Ziel an der Stelle 46. Entlang der Rennbahn sind Kameras 47 postiert, die in bekannter Weise über Triaxkabel 48 direkt mit einem Übertragungswagen 49 verbunden sind. Entlang der Rennstrecke sind ferner im oberen Bereich zwei Anschlußboxen 50 mit Mikrofonen 51 vorgesehen, die ebenfalls in bekannter Weise über Audiokabel 52 direkt mit dem Übertragungswagen 49 verbunden sind.

Gemäß der Erfindung ist an einer räumlich günstigen Stelle eine erste Koppelstation 53 vorgesehen, die über Lichtwellenleiter 54 mit Sprecherkabinen 55 verbunden ist. Eine weitere Koppelstation 56 ist über einen Lichtwellerleiter 57 mit einer Graphik-und Zeitnahmeeinheit 58 verbunden, die ihrerseits über Audiokabel 59 mit einer am unteren Teil der Rennstrecke 44 angeordneten Anschlußbox 60 für die Mikrofonverkabelung verbunden ist. Die Koppelstation 53 ist über ein Lichtwellen-Breitbandkabel 61 mit der Koppelstation 56 und diese über eine Lichtwellen-Breitbandkabel 62 mit einer Andockstation 63 verbunden. Wie in den oben genannten Beispielen erfolgt in den Koppelstationen eine rein optische Signalverteilung, während in der Andockstation 63 eine Wandlung der Quellensignale mit Hilfe elektrooptischer Wandlerelemente erfolgt. Die Andockstation 63 ist im vorliegenden Beispiel über Kabel 64 mit dem Übertragungswagen 49, über Kabel 65 mit einem Eurovisions-Übertragungswagen 66 und über Kabel 67 mit einem Übergabepunkt 68 verbunden, der seinerseits ebenfalls über Kabel 69 mit dem Eurovisions-Übertragungswagen 66 verbunden ist. Im vorliegenden Ausführungsbeispiel sind ferner zwei Stand-Alone-Kameras 70a, b vorgesehen, die ihre Signale ebenfalls in das Lichtwellenleiter-Netz einspeisen. Der Anschluß der Stand-Alone-Kamera 70a erfolgt über Wandlerelemente in der Graphik- und Zeitnahmeeinheit 58. Wie ersichtlich, kann mit dem Einsatz eines derartigen Lichtwellenleiter-Netzes der Verkabelungsaufwand zwischen den Übertragungswagen 49, 66, der Zeitnahmeeinheit 58 und den Sprecherkabinen 55 erheblich verringert werden. Mit der vorgesehenen Ausstattung der Kommentatorenplätze 55 können neue Serviceleistungen und Bearbeitungsmöglichkeiten angeboten werden, ohne daß weitere Kabelwege installiert werden müssen.

## Patentansprüche

1. Anordnung zur Fernseh-Außenübertragung einer Veranstaltung oder dergleichen mit Hilfe eines Übertragungswagens (34), der über Leitungen (30, 11, 20) mit Einrichtungen (12, 21, 22) zur Abgabe und/oder zum Empfang von Video-, Audio- oder Steuersignalen verbunden und in seinem Innern mit entsprechenden Geräten (34a) zur Verarbeitung der Signale versehen ist, wobei
- mindestens eine Koppelstation (10) vorgesehen ist, in welcher von den einzelnen Einrichtungen (12, 21, 22) kommende gesonderte Lichtwellenleiter (11, 20) mit einem Lichtwellen-Breitbandkabel (30) gekoppelt sind,
- das Lichtwellen-Breitbandkabel (30) zur Übergabe von Quellensignalen mit einer Andockstation (31) verbunden ist,
- die Einrichtungen (12, 21, 22) und die Andockstation (31) zur Wandlung der Quellensignale elektrooptische Wandlerelemente (32) aufweisen, und
- die Andockstation (31) mit dem Übertragungswagen (34) verbindbar ist, **dadurch gekennzeichnet, dass** eine vom Signalweg des Fernsehsignals unabhängige ATM (Asynchroner Transfer-Modus) - Übertragungsstrecke (42) zwischen einer Datenbank in einem Sendezentrum (43) und dem Übertragungswagen vorgesehen ist und dass die Einrichtungen (12, 21, 22) über das Lichtwellenleiter-Netz und die ATM (Asynchroner Transfer Modus) - Übertragungsstrecke auf die Datenbank (43) zugreifen können.

2. Anordnung nach Anspruch 1, **dadurch gekennzeichnet, dass** die Andockstation (31) mit mindestens einem Übertragungswagen (34) und/oder mit mindestens einem externen Übergabepunkt (68) verbindbar ist.

3. Anordnung nach Anspruch 1 oder 2, **gekennzeichnet durch** eine zweite Koppelstation (36), die eingangsseitig über gesonderte Lichtwellenleiter (38, 40) mit mindestens einem weiteren Unterregieblock (39, 41) und ausgangsseitig über ein Lichtwellen-Breitbandkabel (37) mit der ersten Koppelstation (10) verbunden ist.

## Claims

1. An arrangement for TV broadcasting an outdoor event or the like by means of a mobile unit (34) which is connected via cables (30, 11, 20) to devices (12, 21, 22) for supplying and/or receiving video, audio or control signals and accommodates corresponding apparatuses (34a) for processing these signals, wherein
- at least one coupling station (10) is provided in which separate optical waveguides (11, 20) outgoing from the individual devices (12, 21, 22) are coupled to a light-wave broadband cable (30),
- the light-wave broadband cable (30) is connected to a docking station (31) for transferring source signals,
- the devices (12, 21, 22) and the docking station (31) comprise electro-optical transducer elements (32) for converting the source signals, and
- the docking station (31) is connectable to the mobile unit (34), **characterised in that** an ATM (Asynchronous Transfer Mode) transfer path (42), independent from the broadcasting path, between the mobile unit and a database in a broadcasting centre (43) is provided, and that the devices (12, 21, 22) can access the database via the ATM (Asynchronous Transfer Mode) transfer path and the optical waveguide network.

2. An arrangement as claimed in claim 1, **characterized in that** the docking station (31) is connectable to at least one mobile unit (34) and/or at least one external transfer point (68).

3. An arrangement as claimed in claim 1 or 2, **characterized by** a second coupling station (36) which is connected, at the input, to at least one further sub-control unit (39, 41) via separate optical waveguides (38, 40) and, at the output, to the first coupling station (10) via a light-wave broadband cable (37).

## Revendications

1. Dispositif de télévision pour la transmission en plein air d'un événement à l'aide d'un véhicule de transmission (34) relié à des dispositifs (12, 21, 22), pour l'émission et/ou la réception de signaux vidéo, audio ou de commande, via des lignes (30, 11, 20) et prévu avec des appareils correspondants (34a) à l'intérieur pour le traitement des signaux, dans lequel
- au moins une station de couplage (10) est prévue, dans laquelle des conducteurs à fibre optique (11, 20) séparés partant des différents dispositifs (12, 21, 22) sont couplés à un câble à large bande à fibre optique (30),
- le câble à large bande à fibre optique (30) est relié à une station d'accueil (31) pour l'émission de signaux source,
- les dispositifs (12, 21, 22) et la station d'accueil (31) disposent d'éléments de conversion (32) électro-optiques pour la conversion des signaux source,
et
- la station d'accueil (31) peut être reliée au véhicule de transmission (34),
**caractérisé en ce qu'**une transmission de liaison ATM (mode de transfert asynchrone) 42, indépendante du trajet du signal de télévision, est prévue entre une base de données d'un centre d'émission (43) et le véhicule de transmission et que les dispositifs (12, 21, 22) peuvent accéder à la base de données (43) via le réseau de conducteurs à fibre optique et la liaison de transmission ATM (mode de transfert asynchrone).

2. Dispositif selon la revendication 1, **caractérisé en ce que** la station d'accueil (31) peut être reliée à au moins un véhicule de transmission (34) et/ou à au moins un point de transmission externe (68).

3. Dispositif selon la revendication 1 ou 2, **caractérisé par** une deuxième station de couplage (36) reliée côté entrée à au moins un bloc de sous-régies (39, 41) supplémentaire via des conducteurs à fibre optique (38, 40) séparés et côté sortie à la première station de couplage (10) via un câble à large bande à fibre optique (37).
